## Europäisches Patentamt

## European Patent Office

## Office européen des brevets

(19)

(11) Veröffentlichungsnummer: **0 250 632**
**A1**

# (12) EUROPÄISCHE PATENTANMELDUNG

(21) Anmeldenummer: **86109035.5**

(22) Anmeldetag: **02.07.86**

(51) Int. Cl.⁴: **H04N 7/01**

(43) Veröffentlichungstag der Anmeldung:
**07.01.88 Patentblatt 88/01**

(84) Benannte Vertragsstaaten:
**DE FR GB IT NL**

(71) Anmelder: **Deutsche ITT Industries GmbH**
**Hans-Bunte-Strasse 19 Postfach 840**
**D-7800 Freiburg(DE)**

(72) Erfinder: **Micic, Ljubomir, Dipl.-Ing.**
**Sundgauallee 15**
**D-7800 Freiburg i.Br.(DE)**
Erfinder: **Fischer, Thomas, Dr.**
**In der Breite 44**
**D-7801 Umkirch(DE)**

(74) Vertreter: **Morstadt, Volker, Dipl.-Ing.**
**c/o Deutsche ITT Industries GmbH**
**Patent/Lizenzabteilung Postfach 840**
**Hans-Bunte-Strasse 19**
**D-7800 Freiburg/Brsg.(DE)**

(54) **Digitaler Bild- und Zeilenzahlwandler für Farbfernsehsignale.**

(57) Ein digitaler Bild-und Zeilenzahlwandler dient als Normenwandler für Farbfernsehsignale. Diese werden digitalisiert und in ihre Bildkomponentensignale (c1) mittels eines Eingangs-Prozessors (p1) zerlegt und halbbildweise in einem Bildspeicher (r) gespeichert. Ein Eingangsfilter (f1) reduziert die zu speichernde Datenmenge, die blockweise in den Bildspeicher (r) geschrieben wird. Ausgangsseitig werden die ausgelesenen Daten (e) in einem Ausgangs-Filter (f2) gefiltert, d.h. die vorherige Datenreduzierung wird rückgängig gemacht, ferner werden die Bilddaten für die nach der neuen Bild-und Zeilenrasternorm wiederzugebenden Bildpunkte bezüglich ihrer Nachbarbildpunkte interpoliert. Die Zusammenfügung der drei gefilterten Ausgangskomponentensignale (c2) zu einem einzigen Ausgangskompositsignal (b2) erfolgt in einem Ausgangs-Prozessor (p2) mit nachfolgender Digital-Analog-Wandlung. Eventuell werden in dem Ausgangs-Prozessor (p2) dem Ausgangskompositsignal (d2) Ausgangsynchronsignale (s2) und Farbsynchronsignale (h2) zugefügt, um ein vollständiges normgerechtes Farbfernsehsignal zu erzeugen. Der Normenwandler ist mindestens in seinen wesentlichen Funktionsteilen monolithisch integrierbar.

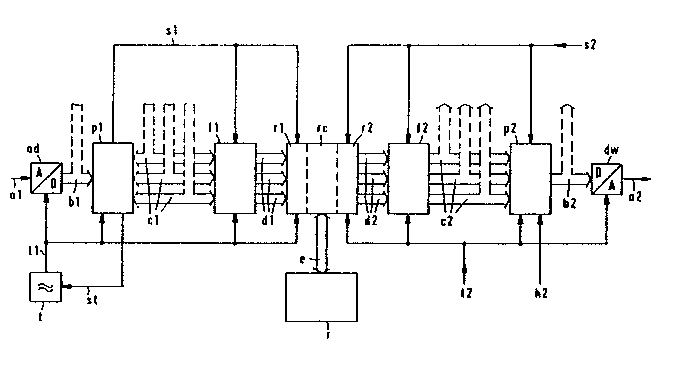

## Digitaler Bild-und Zeilenzahlwandler für Farbfernsehsignale

Die Erfindung betrifft einen digitalen Bild-und Zeilenzahlwandler für Farbfernsehsignale zu deren Umwandlung in bildinhaltsgleiche Farbfernsehsignale, aber mit anderer Bild-und Zeilenzahl, vgl. den Oberbegriff des Anspruchs 1.

Ein derartiger digitaler Bild-und Zeilenzahlwandler ist im INTERMETALL-Datenblatt, VMC 2260 Video Memory Controller, Ausgabe 1986/4, Freiburg, 4 Seiten, insbesondere Abschnitt 1 und 2 mit Figuren 1 und 2 beschrieben. Dieser Stand der Technik beschäftigt sich mit der Umwandlung von Farbfernsehsignalen mittels einer digitalen Schaltung in eine höhere Bild-und Zeilenfrequenz, um auf diese Weise zu einem hinsichtlich der Zeile und des Hintergrunds flimmerfreien Fernsehbild zu gelangen. Dabei werden die Einzelkomponenten der einzelnen Bildpunkte als Daten in einem Halbbildspeicher abgelegt und von dort mit erhöhter Zeilen-und Bildfrequenz wieder ausgelesen. Um die zu speichernde Datenmenge zu verkleinern, durchlaufen die Bildkomponentensignale auf der Ein-und Ausgangsseite Filterschaltungen. Eine weitere Funktion der ausgangsseitigen Filterschaltungen ist die Interpolation der ausgelesenen Daten, um neue störende Interferenzstrukturen im Bild zu vermeiden.

Der in den Ansprüchen gekennzeichneten Erfindung liegt die Aufgabe zugrunde, den digitalen Bild-und Zeilenzahlwandler nach dem Oberbegriff des Anspruchs 1 so wei ter auszugestalten, daß damit die Bild-und Zeilenzahl nicht nur in einfachen Zahlenverhältnissen (z.B. 1,5-, 2-, 3-fach) änderbar ist, wie bei der Forderung nach flimmerfreien Fernsehbildern, sondern daß die Bild-und Zeilenzahlwahl eine andere Farbfernsehnorm erfassen kann.

Die Eingangsseite des digitalen Bild-und Zeilenzahlwandlers enthält einen Eingangsprozessor, der zur Erzeugung eines geeigneten Eingangstaktes für die Abtastung und weitere Verarbeitung des eingangsseitig zugeführten analogen Farbfernsehsignals dient und ferner Schlatungsteile enthält, die aus dem digitalisierten Farbfernsehsignal die Zeilen-und Bildsynchronsignale abtrennen. Die Frequenz und/oder Phasenlage des Eingangstaktes muß das Abtasttheorem erfüllen, kann dabei aber je nach der speziellen Ausführungsform des Eingangsprozessors in einem festen Verhältnis zur Frequenz und/oder Phase des bekanntlich als Farbsynchronsignal übertragenen unmodulierten Farbhilfsträgers - z.B. zu dessen vierfacher Frequenz beim PAL-oder NTSC-Farbfernsehstandard oder zur vierfachen Glockenfilter-Mittenfrequenz beim SECAM-Farbfernsehstandard - oder zu einem anderen systemeigenen Signal - z.B. zur Zeilenfrequenz - oder zu einem anderen Bezugssignal - beispielsweise beim Videorecorderbetrieb - stehen.

Die Signalverarbeitung der Ausgangsseite des digitalen Bild-und Zeilenzahlwandlers und die Umwandlung des digitalisierten Farbfernsehsignals in das analoge Ausgangssignal wird von einem Ausgangstakt gesteuert, des sen Frequenz und/oder Phasenlage von der speziellen Anwendung des Normenwandlers abhängig ist. Insbesondere braucht der Ausgangtakt mit dem Eingangtakt in keiner festen Frequenz-und/oder Phasenbeziehung zu stehen. Die Frequenz des Ausgangstaktes wird z.B. bei der Erzeugung eines Kompositsignals auf der Ausgangsseite gemäß der CCIR-Empfehlung 601, die einen digitalen Studio-Standard mit 8 Bit Signalauflösung bei einer Taktfrequenz von 13,5 MHz betrifft, natürlich auch 13,5 MHz betragen, bei der Erzeugung eines Kompositsignals nach dem PAL-oder NTSC-Farbfernsehstandard günstigerweise das Vierfache der jeweiligen Farbträgerfrequenz und schließlich beim SECAM-Farbfernsehstandard entsprechend günstigerweise das Vierfache der Glockenfilter-Mittenfrequenz betragen.

Ein Vorteil der Erfindung ist, daß sie mindestens in ihren wesentlichen Teilen monolithisch integrierbar und damit auch für den Konsumbereich erschwinglich ist. Der Einsatz dieser Schaltung ermöglicht, daß z.B. Fernsehempfänger oder Videorecorder durch Vorsatz dieser Schaltung mehrnormtauglich werden. Damit ist auch die Freiheit im Anschluß anderer Signalquellen, wie z.b. Videokameras oder Heimrechner mit einem anderen Farbfernsehstandard, vergrößert.

Ein weiterer Vorteil ist die weitgehende Mitverwendung von Schaltungsteilen, die bereits bei der Bildverbesserung im Sinne eines flimmerfreien Fernsehbildes im Fernsehempfänger vorhanden sind. Dies ermöglicht die Normumwandlung bei gleichzeitig flimmerfreier Bild-und Zeilenwiedergabe.

Die Erfindung wird nun anhand der Figure der Zeichnung näher erläutert.

Die Figur zeigt schematisch als Blockschaltbild ein Ausführungsbeispiel des digitalen Bild-und Zeilenzahlwandlers für die Normenwandlung von Farbfernsehsignalen.

In der Figur ist dem Analog-Digitalwandler ad eingangsseitig das analoge Farbfernsehsignal a1 zugeführt. Der Abtasttakt für die Digitalisierung ist der Eingangtakt t1. Das Ausgangssignal des Analog-Digital-Wandlers ad ist das digitalisierte Eingangssignal b1, das dem Eingang des Eingangs-Prozessors p1 zugeführt ist. Als Eingangssignal b1 für den Bild-und Zeilenzahlwandler kann aber auch ein digitalisiertes Eingangssignal über die gestrichelt gezeichnete Zuleitung aus anderen in der Figur nicht gezeichneten Schaltungsteilen direkt dem Eingang des Eingangs-Prozessors p1 zugeführt werden. Dieser erzeugt aus dem digitalisierten Eingangssignal b1 die drei Bildkomponentensignale c1, die dem Eingangsfilter f1 zugeführt sind. Ferner erzeugt der Eingangs-Prozessor p1 aus dem digitalisierten Eingangssignal b1 die Eingangs-Synchronsignale s1 und ein Steuersignal st, das dem Taktgenerator t zur Erzeugung des Eingangstaktes t1 dient. Im Falle der direkten Zuführung des digitalisierten Eingangssignales b1 entfällt natürlich der Analog-Digitalwandler ad, und der Eingangstakt t1 wird entweder zusammen mit dem digitalisierten Eingangssignal b1 dem Bild-und Zeilenzahlwandler zugeführt, oder er wird durch die frequenzmäßige Ankopplung des Taktgenerators t mit Hilfe des Eingangs-Prozessors p1 an die Taktfrequenz des digitalisierten Eingangssignals b1 erzeugt.

Liegen als Eingangssignale bereits die Bildkomponentensignale c1 aus anderen in der Figur nicht näher gezeichneten Schaltungsteilen vor, können sie direkt dem Eingangsfilter f1 zugeführt werden, wie in der Figur mittels der gestrichelt gezeichneten Datenleitungen angedeutet ist. Werden der Eingangstakt t1 und die Eingangssynchronsignale s1 dabei von außerhalb zugeführt, kann neben dem Analog-Digitalwandler ad auch der Eingangs-Prozessor p1 entfallen. Wird hingegen der Eingangstakt t1 im Bild-und Zeilenzahlwandler selbst erzeugt, indem beispielsweise der Eingangstakt t1 aus dem Datenwechseltakt der zugeführten Bildkomponentensignale c1 abgeleitet wird, erfolgt die frequenzmäßige Ankopplung des Eingangstaktes t1 durch den Eingangs-Prozessor p1, dem mindestens eines der Bildkomponentensignale c1 zugeführt ist, was in der Figur durch die gestrichelten Pfeile der Bildkomponentensignal-Datenanschlüsse am Eingangs-Prozessor p1 angedeutet ist. Wenn die Eingangssynchronsignale s1 aus den Bildkomponentensignalen c1 abzuleiten sind, wird der Eingangs-Prozessor p1 mindestens mit einem der von außen zugeführten Bildkomponentensignale c1 gespeist.

Das Eingangsfilter f1 dient der Datenreduktion der zu speichernden Bildkomponentensignale c1 und ermöglicht daher einen kleineren Bildspeicher im Vergleich zur Speicherung der unreduzierten Bilddaten. Bestehen die Bildkomponentensignale z.B. aus dem Helligkeits-( = Y-Signal), dem (B-Y)- und dem (R-Y)-Farbdifferenzsignal, dann kann die Bandbreite der beiden Farbdifferenzsignale gegenüber dem Helligkeitssignal reduziert werden, was einer geringeren Datenmenge entspricht.

Ähnlich, aber nicht ganz so wirksam ist die Datenreduktion, wenn als Bildkomponentensignale c1 direkt die einzelnen Farbsignale, also das R-, G-und B-Farbsignal vorliegen. Die gefilterten Eingangssignale d1 speisen den Eingangspufferspeicher r1 der Speichersteuerstufe rc. In dieser werden die gefilterten Eingangssignale d1 mittels der Eingangssynchronsignale s1 blockweise geordnet, und diese Blöcke werden als Daten e in den Bildspeicher r eingeschrieben. Die Zuordnung der Adressen der Daten e erfolgt dabei nach dem jeweiligen Bildort des übertragenen Datenblocks im entsprechenden Halbbild. Zur Steuerung der Datenübertragung und Datenverarbeitung ist dabei dem Eingangs-Prozessor p1, dem Eingangsfilter f1 und einem Teil der Speichersteuerstufe rc de Eingangstakt t1 zugeführt.

Für den Bildaufbau des ausgelesenen Fernsehbildes ist die Steuerung durch die jeweiligen Bildsynchronsignale dieses Ausgangsbildes, nämlich durch die Ausgangssynchronsignale s2, erforderlich. Diese steuern den zeilenweisen Bildaufbau des Ausgangsbildes. Dessen punktweiser Aufbau wird hingegen von dem Ausgangstakt t2 gesteuert. Somit werden dem Teil der Speichersteuerstufe rc, der den Leseteil betrifft, der Ausgangstakt t2 und die Ausgangsynchronsignale s2 zugeführt. Die wieder blockweise aus dem Bildspeicher r ausgelesenen Daten e gelangen in den Ausgangspufferspeicher r2 der Speichersteuerstufe rc. Von dort gelangen die drei Komponentensignale d2 an jeweils einen Eingang des Ausgangsfilters f2, dem als Steuersignale ebenfalls der Ausgangstakt t2 und die Ausgangssynchronsignale s2 zugeführt sind.

Die im Ausführungsbeispiel nach der Figur beschriebene blockweise Übertragung der Daten in den Bildspeicher r und aus ihm heraus kann natürlich durch eine schnelle "one line"-Übertragung ersetzt werden, wenn Bildspeicher mit entsprechend schnellem und entkoppeltem Schreib-und Leseverhalten zur Verfügung stehen.

Im Ausgangsfilter f2 wird die eventuell eingangsseitig erfolgte Datenreduktion rückgängig gemacht, die im Eingangsfilter f1 durchgeführt wurde. Ferner werden im Ausgangsfilter f2 die erforderlichen Interpolationen zwischen horizontal und vertikal benachbarten Bildpunkten durchgeführt. Die Veränderung eines wiederzugebenden Bildpunktes durch die Einbeziehung der horizontalen und vertikalen Nachbarbildpunkte verhindert sichtbare Interferenzmuster auf dem Bildschirm, die andernfalls durch das unterschiedliche Punkt-und Zeilenraster störend im wiedergegebenen Fernsehbild auftreten würden. Die Filterung der Ausgangskomponentensignale d2 kann aber auch der subjektiv empfundenen Bildverbesserung dienen, indem z.B. Kontrastübergänge versteilert oder Farb-und Helligkeitsübergänge aneinander angepaßt werden. Beim Übergang auf Techniken der flimmerfreien Bildwiedergabe, die ebenfalls mit der Anordnung möglich sind, sind bei der Interpolation im Ausgangsfilter f2 nicht nur der örtliche Inhalt der einzelnen Bildpunkte, sondern auch noch ihre zeitliche Veränderbarkeit in Form einer Bewegungserkennung zu berücksichtigen. Bei diesem Verfahren muß sich dann der gespeicherte Inhalt des Bildspeichers r auf mehr als ein Halbbild erstrecken, und im Ausgangsfilter f2 sind dann neben den räumlich benachbarten Bildpunkten auch noch deren zeitlich benachbarte Bildpunkte mindestens eines vorausgehenden Halbbildes zu berücksichtigen.

Die Ausgangssignale des Ausgangsfilters f2 sind die gefilterten Ausgangskomponentensignale c2. Diese werden entweder dem Ausgangsprozessor p2 zugeführt, der diese Signale zum Ausgangskompositsignal b2 zusammenfaßt, oder die gefilterten Ausgangskomponentensignale c2 werden in dieser getrennten Form weiteren nicht näher gezeigten Schaltungsteilen zur Bildsignalverarbeitung zugeführt, was in der Figur durch die gestrichelten Datenabzweigungen der Ausgangskomponentensignale c2 dargestellt ist.

Ein normgemäßes Farbfernsehsignal enthält neben den Bildsignalen Zeilen-und Bildsynchron-Signale. Diese werden in Form der Ausgangssynchronsignale s2, oder in Form daraus abgeleiteter Signale mittels des Ausgangs-Prozessors p2 dem Ausgangskompositsignal b2 zugefügt. Ferner sind die für die jeweilige Fernsehnorm erforderlichen Farbsynchronsignale h2 dem Ausgangs-Prozessor p2 als Digitalsignale zugeführt und werden als Burst-Schwingung auf der hinteren Schwarzschulter des digitalen Farb-Bild-Austast-Synchron-Signalgemisches normgerecht eingefügt. Das so vorliegende Ausgangskompositsignal b2 kann als digitales Signal weiterverarbeitet werden oder zur Digital-Analog-Wandlung dem Digital-Analogwandler dw zugeführt werden. Dessen Ausgangssignal ist das Ausgangsanalogsignal a2, das ein normgerechtes Fernsehsignal darstellt. Für die flimmerfreie Fernsehbilddarstellung oder andere Spezielle Anwendungen weicht das Ausgangsanalogsignal a2 entsprechend anderer Ausgangssynchronsignale s2 und Farbsynchronsignale h2 von der Norm ab.

Der Eingangsprozessor p1 und der Ausgangs-Prozessor p2 sind in bekannter Weise an den PAL-, NTSC-, SECAM-oder andere Farbfernseh-Standards angepaßt und enthalten die dafür jeweils erforderlichen Schaltungsteile.

## Ansprüche

1. Digitaler Bild-und Zeilenzahlwandler für Farbfernsehsignale mit folgenden in Signalflußrichtung hintereinandergeschalteten Schaltungsteilen:
-einem von einem Eingangstakt (t1) getakteten Analog-Digitalwandler (ad) für ein analoges Farbfernsehsignal (a1),
-einem Eingangs-Prozessor (p1) zur Zerlegung des digitalisierten Eingangssignals (b1) in seine Bildkomponentensignale (c1) und in seine Eingangssynchronsignale (s1),
-einem Eingangsfilter für mindestens eines der Bildkomponentensignale (c1),
-einer Speichersteuerstufe (rc), an die ein Bildspeicher (r) angeschlossen ist, der mindestens die Bilddaten eines Halbbild speichert, und
-einem Ausgangsfilter (f2) für mindestens eines der aus dem Bildspeicher (r) ausgelesenen Ausgangskomponentensignale (d2),
-wobei die Signalverarbeitung in zwei Bereiche aufgeteilt ist, deren erster sich von der Digitalisierung bis zu einem ersten Teil der Speichersteuerstufe (rc) erstreckt und als Steuersignale den Eingangstakt (t1) und die Eingangssynchronsignale (s1) zugeführt erhält und deren zweiter Bereich sich von einem zweiten Teil der Speichersteuerstufe (rc) auf die dieser nachgeschalteten Schaltungsteile erstreckt und als Steuersignale einen Ausgangstakt (t2) und Ausgangssynchronsignale (s2), zugeführt erhält,
gekennzeichnet durch folgende Merkmale:
-dem Ausgangsfilter (f2) ist ein Ausgangs-Prozessor (p2) zur Erzeugung eines Ausgangskompositsignales (b2) nachgeschaltet, das einem Digital-Analog-Wandler (dw) zugeführt ist,
-der Eingangstakt (t1) und der Ausgangstakt (t2) sind bezüglich ihrer jeweiligen Frequenz und Phase voneinander unabhängig,
-die Ausgangssynchronsignale (s2) sind die normgerechten Zeilen-und Bildwechselsignale derjenigen Fernsehnorm, in der das Ausgangsanalogsignal (a2) vorliegen soll, und
-die für diese Fernsehnorm erforderlichen Farbsynchronsignale (h2) sind dem Ausgangs-Prozessor (p2) als Digitalsignale zugeführt.

2. Digitaler Bild-und Zeilenzahlwandler nach Anspruch 1, dadurch gekennzeichnet, daß die Speichersteuerstufe (rc) einen Eingangs-und einen Ausgangspufferspeicher (r1, r2) enthält und daß die Adressen der zu speichernden Daten (e) ihrem jeweiligen Ort innerhalb des Bildes zugeordnet sind.

3. Digitaler Bild-und Zeilenzahlwandler nach Anspruch 1 oder 2, dadurch gekennzeichnet, daß als Bildkomponentensignale (c1) bzw. Ausgangskomponentensignale (c2) das jeweilige Helligkeits-
(= Y-Signal), (B-Y)-und (R-Y)-Farbdifferenzsignal
oder das jeweilige R-, G-und B-Signal dienen.

4. Digitaler Bild-und Zeilenzahlwandler nach einem der Ansprüche 1 bis 3, dadurch gekennzeichnet, daß er direkt mit dem digitalisierten Eingangssignal (b1) oder mit den dem Eingangsfilter (f1) zugeführten Bildkomponentensignalen (c1), ferner mit den Eingangssynchronsignalen (s1) und mit dem Eingangstakt (t1) als Eingangssignalen gespeist ist.

5. Digitaler Bild-und Zeilenzahlwandler nach Anspruch 4, dadurch gekennzeichnet, daß er bereits vorhandene Eingangssynchronsignale (s1) und den Eingangstakt (t1) zugeführt erhält oder daß die Eingangssynchronsignale (s1) und/oder der Eingangstakt (t1) mittels des Eingangs-Prozessors (p1) aus dem digitalisierten Eingangssignal (b1) und/oder den Bildkomponentensignalen (c1) erzeugt und hinzugefügt sind.

6. Digitaler Bild-und Zeilenzahlwandler nach einem der Ansprüche 1 bis 5 , dadurch gekennzeichnet, daß das Ausgangsfilter (f2) neben einer räumlichen Interpolation von Bildpunkten, die in Horizontal-und Vertikalrichtung benachbart sind, auch eine zeitliche Interpolation dieser benachbarten Bildpunkte durchführt, indem benachbarte Bildpunkte mindestens eines vorangehenden Halbbildes berücksichtigt werden, wobei im Bildspeicher (r) die entsprechenden Halbbilder gespeichert sind.

7. Digitaler Bild-und Zeilenzahlwandler nach einem der Ansprüche 1 bis 6, dadurch gekennzeichnet, daß die Frequenz und/oder Phasenlage des Eingangstaktes (t1) in einem festen Verhältnis zur Frequenz und/oder Phasenlage eines systemeigenen Signals steht.

8. Digitaler Bild-und Zeilenzahlwandler nach Anspruch 7, dadurch gekennzeichnet, daß das systemeigene Signal entweder das eingangsseitige Farbsynchronsignal, das Zeilensynchronsignal, ein Signal, dessen Frequenz gleich der Mittenfrequenz des SECAM-Glockenfilters ist, das Bezugssignal beim Videorecorderbetrieb oder ein internes Taktsignal ist.

9. Digitaler Bild-und Zeilenzahlwandler nach einem der Ansprüche 1 bis 8, dadurch gekennzeichnet, daß er gleichzeitig der Normumwandlung und der flimmerfreien Zeilen-und Bildwiedergabe dient.

10. Digitaler Bild-und Zeilenzahlwandler nach einem der Ansprüche 1 bis 9, dadurch gekennzeichnet, daß er minde stens in wesentlichen Funktionsteilen monolithisch integriert ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 069 325 (BOSCH) <br> * Seite 3, Zeile 5 - Seite 5, Zeile 36; Figur 1 * <br><br> --- | 1-10 | H 04 N 7/01 |
| A | GB-A-2 114 396 (PHILIPS) <br> * Seite 2, Zeile 93 - Seite 3, Zeile 107; Figur 1 * <br><br> --- | 1-10 | |
| A | US-A-4 163 249 (MICHAEL et al.) <br> * Spalte 3, Zeile 42 - Spalte 4, Zeile 32; Figur 1 * <br><br> --- | 1 | |
| A | ROYAL TELEVISION SOCIETY JOURNAL, Band 15, Nr. 5, September-Oktober 1974, Seiten 140-159, London, GB; J.L.E. BALDWIN et al.: "DICE: The first intercontinental digital standards converter" <br> * Seiten 140-145, Spalte 1; Figuren 1-6 * <br><br> ----- | 1 | **RECHERCHIERTE SACHGEBIETE (Int. Cl.4)** <br><br> H 04 N 7/00 |

Der vorliegende Recherchenbericht wurde für alle Patentansprüche erstellt.

| Recherchenort | Abschlußdatum der Recherche | Prüfer |
|---|---|---|
| BERLIN | 22-01-1987 | DUDLEY C. |